(19) Europäisches Patentamt
European Patent Office
Office européen des brevets

(11) **EP 4 141 506 A1**

(12) **EUROPEAN PATENT APPLICATION**

(43) Date of publication:
**01.03.2023 Bulletin 2023/09**

(21) Application number: **22192253.7**

(22) Date of filing: **26.08.2022**

(51) International Patent Classification (IPC):
**G02B 13/16** (2006.01)    **G02B 17/08** (2006.01)
**G02B 27/18** (2006.01)    **G03B 21/14** (2006.01)
**G03B 21/28** (2006.01)

(52) Cooperative Patent Classification (CPC):
**G02B 13/16; G02B 17/08; G02B 27/18;
G03B 21/14; G03B 21/28**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021 CN 202111008977**

(71) Applicant: **Coretronic Corporation
Hsin-Chu 300 (TW)**

(72) Inventors:
• **CHEN, YOU-DA
300 Hsin-Chu (TW)**
• **TSAI, HSIN-WEN
300 Hsin-Chu (TW)**
• **WEI, CHING-CHUAN
300 Hsin-Chu (TW)**

(74) Representative: **Ter Meer Steinmeister & Partner
Patentanwälte mbB
Nymphenburger Straße 4
80335 München (DE)**

(54) **PROJECTION LENS AND PROJECTION APPARATUS**

(57)    A projection lens including a first lens group, an aperture stop, a second lens group, and a reflective optical element sequentially arranged from a reduction side to a magnification side along an optical axis is provided. The first lens group has positive refractive power. The second lens group has negative refractive power. The reflective optical element has positive refractive power. The projection lens satisfies $1.2 < |F_2/F_1| < 3.5$, wherein $F_2$ is an effective focal length of the reflective optical element, and $F_1$ is an effective focal length of the first lens group and the second lens group. A projection apparatus is also provided.

FIG. 2

**Description**

BACKGROUND OF THE DISCLOSURE

Field of the Disclosure

The disclosure relates to an optical lens and an optical apparatus, and more particularly to a projection lens and a projection apparatus.

Description of Related Art

The conventional ultra-short throw projection lens generally includes a first optical system, a second optical system, a first aperture stop, a second aperture stop, and a reflective optical system (which can be a concave mirror). The light valve is located on the reduction side, and the first optical system includes a plurality of lenses for receiving an image from the light valve on the reduction side to form a first intermediate image. The second optical system includes a plurality of lenses for receiving the first intermediate image from the first optical system to form a second intermediate image. The reflective optical system has positive refractive power, and a position of the reflective optical system is closer to the magnification side than a position of the second intermediate image. The first aperture stop is provided between the light emitting surface of the light valve and the first intermediate image. The second aperture stop is provided between the first intermediate image and the second intermediate image. The second intermediate image formed by the second optical system is enlarged and projected on the screen by the reflective surface of the reflective optical system.

However, the conventional ultra-short throw projection lens is disposed with too many lenses, which leads to higher production costs. Moreover, on basis of the optical system described above, the mechanism design of the optical system is relatively complicated, and the overall length of the projection lens is longer. Therefore, the conventional ultra-short throw projection lens is not suitable for small-sized projectors.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

SUMMARY OF THE DISCLOSURE

The disclosure provides a projection lens, and the number of lenses disposed therein is reduced.

The disclosure provides a projection device using the projection lens, and the projection device has a smaller length and a lower cost is achieved.

The object is solved by the features of the independent claim. Preferred embodiments are given in the dependent claims.

An embodiment of the disclosure provides a projection lens. The projection lens includes a first lens group, an aperture stop, a second lens group, and a reflective optical element sequentially arranged from a reduction side to a magnification side along an optical axis. The first lens group has positive refractive power. The second lens group has negative refractive power. The reflective optical element has positive refractive power. The projection lens satisfies $1.2 < | F_2/F_1 | < 3.5$, $F_2$ is an effective focal length of the reflective optical element, and $F_1$ is an effective focal length of the first lens group and the second lens group.

An embodiment of the disclosure provides a projection apparatus, which includes an illumination system, a light valve, and a projection lens. The illumination system is configured to provide an illumination beam. The light valve is arranged on the transmission path of the illumination beam, and is configured to convert the illumination beam into an image beam. The projection lens is arranged on the transmission path of the image beam, and is configured for receiving the image beam from the light valve to generate and project the projection beam. The projection lens includes a first lens group, an aperture stop, a second lens group, and a reflective optical element sequentially arranged from a reduction side to a magnification side along an optical axis. The first lens group has positive refractive power. The second lens group has negative refractive power. The reflective optical element has positive refractive power. The projection lens satisfies $1.2 < | F_2/F_1 | < 3.5$, $F_2$ is an effective focal length of the reflective optical element, and $F_1$ is an effective focal length of the first lens group and the second lens group.

In one or more embodiments, the first lens group may comprise seven lenses.

In one or more embodiments, the refractive powers of the seven lenses may be positive, positive, negative, positive, negative, negative, and positive in sequence from the reduction side to the magnification side.

In one or more embodiments, the Abbe numbers of at least two of the seven lenses may be greater than or equal to 70.

In one or more embodiments, the second lens group may comprise four lenses, and the refractive powers of the four lenses may be positive, negative, negative, and negative in sequence from the reduction side to the magnification side.

In one or more embodiments, the first lens group may comprise six lenses, the refractive powers of the six lenses may be positive, positive, negative, positive, negative, and positive in sequence from the reduction side to the magnification side, and/or Abbe numbers of at least two of the six lenses may be greater than or equal to 70.

In one or more embodiments, the first lens group may comprise at least one cemented lens.

In one or more embodiments, the first lens group may comprise at least one aspheric lens.

In one or more embodiments, the second lens group may comprise at least one aspheric lens.

In one or more embodiments, an aperture of the projection lens may fall within a range of 1.7 to 2.0.

In one or more embodiments, the first lens group may be a compensation group.

In one or more embodiments, the second lens group may be is a focus group.

In one or more embodiments, when the projection lens performs focusing, the first lens group and the second lens group may move along the optical axis.

In one or more embodiments, the projection beam may form an image on an imaging plane after being projected from the projection apparatus.

In one or more embodiments, a central beam of the image beam emitted from a center of the light valve may be projected by the projection lens and may correspond to a center of the image formed on the imaging plane.

In one or more embodiments, there may be two intersection points between the central beam of the image beam and the optical axis.

Based on the above, in an embodiment of the disclosure, since the projection lens or projection apparatus is designed to satisfy $1.2 < | F_2/F_1 | < 3.5$, the optical structure of the projection lens or projection apparatus is relatively simple, making the design of mechanism easier.

Other objectives, features and advantages of the present disclosure will be further understood from the further technological features disclosed by the embodiments of the present disclosure wherein there are shown and described preferred embodiments of this disclosure, simply by way of illustration of modes best suited to carry out the disclosure.

BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

FIG. 1 is a block diagram of a projection apparatus of a first embodiment of the disclosure.

FIG. 2 is a schematic diagram of a projection lens in the projection apparatus of FIG. 1.

FIG. 3 to FIG. 7 are the transverse ray fan plots of the projection lens of FIG. 2 at different object heights.

FIG. 8 to FIG. 12 are respectively spot diagrams of different wavelengths of light after passing through the projection lens of FIG. 2 at different image heights and object heights.

FIG. 13 is a modulation transfer function diagram of the projection lens of FIG. 2.

FIG. 14 is a schematic diagram of a projection lens of a second embodiment of the disclosure.

FIG. 15 to FIG. 19 are the transverse ray fan plots of the projection lens of FIG. 14 at different object heights.

FIG. 20 to FIG. 24 are respectively spot diagrams of different wavelengths of light after passing through the projection lens of FIG. 14 at different image heights and object heights.

FIG. 25 is a modulation transfer function diagram of the projection lens of FIG. 14.

DESCRIPTION OF EMBODIMENTS

In the following detailed description of the preferred embodiments, reference is made to the accompanying drawings which form a part hereof, and in which are shown by way of illustration specific embodiments in which disclosure may be practiced. In this regard, directional terminology, such as "top," "bottom," "front," "back," etc., is used with reference to the orientation of the Figure(s) being described. The components of the present disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

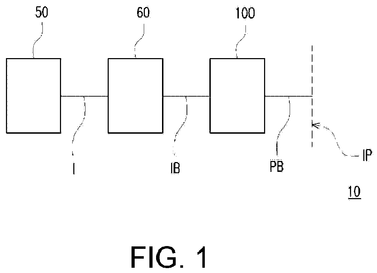

FIG. 1 is a block diagram of a projection apparatus according to a first embodiment of the disclosure. Please refer to FIG. 1, an embodiment of the disclosure provides a projection apparatus 10, which includes an illumination system 50, a light valve 60 and a projection lens 100. The illumination system 50 is configured to provide an illumination beam I. The light valve 60 is disposed on the transmission path of the illumination beam I, and is configured to convert the illumination beam I into an image beam IB. The projection lens 100 is disposed on the transmission path of the image beam IB, and is configured for receiving the image beam IB from the light valve 60 and generating the projection beam PB. The projection beam PB is projected outside the projection apparatus 10 and forms an image on the imaging plane IP.

In detail, the illumination system 50 of this embodiment includes, for example, a light-emitting module, a wavelength conversion element, a homogenizing element, filter element, and multiple light splitting and combining elements. The illumination system 50 is configured to provide the illumination beam I with different wavelengths as the source of image beam. The light-emitting module is, for example, a metal halide lamp, a high-pressure mercury lamp, or a solid-state illumination source, such as multiple light-emitting diodes, multiple laser diodes, and etc. However, the disclosure provides no limitation to the type or form of the illumination system 50 in the projection apparatus 10. The detailed structure and implementation of the illumination system 50 can be obtained from the common knowledge in the technical field with sufficient teaching, suggestion and implementation, so no further description is incorporated herein.

In this embodiment, the light valve 60 is, for example, a reflective light modulator such as a liquid crystal on silicon panel (LCOS panel) or a digital micro-mirror device (DMD). In some embodiments, the light valve 60 may also be a transmissive light modulator such as a transparent liquid crystal panel, an electro-optical modulator, a maganeto-optic modulator and an acousto-optic modulator (AOM). The disclosure provides no limitation to the form and type of the light valve 60. The detailed steps and implementation of the method for the light valve 60 to convert the illumination beam I into the image beam IB can be obtained from the common knowledge in the technical field with sufficient teaching, suggestion and implementation, and therefore no further description is incorporated herein. In this embodiment, the number of light valves 60 is one, for example, the projection apparatus 10 using one single digital micro-mirror element (DMD), but in other embodiments there may be more than one light valve 60, and the disclosure is not limited thereto.

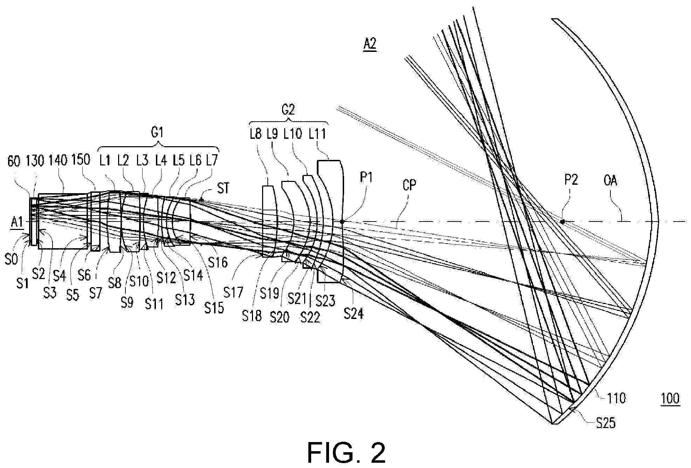

FIG. 2 is a schematic diagram of a projection lens in the projection apparatus of FIG. 1. Please refer to FIG. 2, in this embodiment, the projection lens 100 includes a first lens group G1, an aperture stop ST, a second lens group G2, and a reflective optical element 110 that are sequentially arranged from a reduction side A1 to a magnification side A2 along an optical axis OA of the projection lens 100. In this embodiment, the light valve 60 is arranged on the reduction side A1, and the image beam IB generated by the light valve 60 passes through the first lens group G1, the aperture stop ST, and the second lens group G2 in sequence from the reduction side A1, and then is transmitted to the reflective optical element 110. The image beam IB is reflected by the reflective optical element 110 and a projection beam PB is generated and projected toward the magnification side A2.

In this embodiment, a central beam CP of the image beam IB emitted from the center of the light valve 60 is projected by the projection lens 100 and corresponds to the center of the image formed on the imaging plane IP. There are two intersection points P1 and P2 between the central beam CP of the image beam IB and the optical axis OA.

In this embodiment, the first lens group G1 includes seven lenses L1, L2, L3, L4, L5, L6, and L7 that are sequentially arranged from the reduction side A1 to the magnification side A2 along the optical axis OA. The first lens group G1 has positive refractive power. Moreover, the refractive powers of the seven lenses L1, L2, L3, L4, L5, L6, and L7 are positive, positive, negative, positive, negative, negative, and positive in sequence from the reduction side A1 to the magnification side A2. The Abbe numbers of at least two of the seven lenses L1, L2, L3, L4, L5, L6, and L7 in the first lens group G1 are greater than or equal to 70. For example, the lens L2 and the lens L4 are made of nitre materials and have an Abbe number greater than or equal to 70. The second lens group G2 includes four lenses L8, L9, L10 and L11 arranged in sequence from the reduction side A1 to the magnification side A2 along the optical axis OA. The second lens group G2 has negative refractive power. Moreover, the refractive powers of the four lenses L8, L9, L10, and L11 are positive, negative, negative, and negative in sequence from the reduction side A1 to the magnification side A2. Therefore, compared with the conventional projection lens, the total number of lenses used in the projection lens 100 of the disclosure is reduced to 11, so that the length of the projection lens is reduced, the volume of material of the system can also be decreased, and the cost is further lowered. As the length of the projection lens 100 is reduced, the projection lens 100 is suitable for projection apparatuses of various sizes.

In this embodiment, the first lens group G1 includes at least one cemented lens. For example, the lenses L2, L3, and L4 are formed into a cemented lens, and the lenses L5, L6, and L7 are formed into the other cemented lens. Moreover, with the characteristics of cemented lenses and through the use of a lens whose Abbe number is designed to be greater than or equal to 70, it is possible to decrease optical chromatic aberration.

In this embodiment, the first lens group G1 includes at least one aspheric lens. The second lens group G2 includes at least one aspheric lens. For example, the lens L1 in the first lens group G1and the lenses L9 and L11 in the second lens group G2 are aspheric lenses.

In this embodiment, the reflective optical element 110 has positive refractive power, and the reflective optical element 110 includes a reflective surface S25. The reflective surface S25 has positive refractive power and is an aspheric surface.

The following Table 1 and Table 2 show the data of a preferred embodiment of the projection lens 100. However, the information listed below is not intended to limit the disclosure. Anyone familiar with the art in the related field can make appropriate changes to its parameters or settings after referring to the disclosure, but the change should still fall within the scope of the disclosure.

In this embodiment, the actual design of the aforementioned elements can be derived from Table 1 below.

Table 1

| Element | Surface | Type | Curvature (1/mm) | Distance (mm) | Refractive index (Nd) | Abbe number (Vd) |
|---|---|---|---|---|---|---|
| 110 | S25 | Aspherical | -0.032 | -71.36 | | |
| L11 | S24 | Aspherical | 0.038 | -2.20 | 1.53 | 56.28 |
| | S23 | Aspherical | -0.068 | -2.23 | | |
| L10 | S22 | Spherical | -0.060 | -1.20 | 1.78 | 45.70 |
| | S21 | Spherical | -0.089 | -1.78 | | |
| L9 | S20 | Aspherical | -0.070 | -3.68 | 1.53 | 56.28 |
| | S19 | Aspherical | -0.076 | -3.71 | | |
| L8 | S18 | Spherical | -0.045 | -3.50 | 1.65 | 28.59 |
| | S17 | Spherical | -0.003 | -14.07 | | |
| ST | | Plane | 0.000 | -2.43 | | |
| L7 | S16 | Spherical | -0.036 | -4.30 | 1.59 | 35.23 |
| L6 | S15 | Spherical | 0.162 | -1.00 | 1.57 | 52.28 |
| L5 | S14 | Spherical | 0.121 | -1.00 | 1.80 | 37.39 |
| | S13 | Spherical | 0.058 | -0.74 | | |
| L4 | S12 | Spherical | -0.008 | -3.45 | 1.50 | 81.59 |
| L3 | S11 | Spherical | 0.092 | -0.80 | 1.81 | 24.99 |
| L2 | S10 | Spherical | -0.003 | -4.28 | 1.50 | 81.59 |
| | S9 | Spherical | 0.081 | -0.20 | | |
| L1 | S8 | Spherical | -0.037 | -3.10 | 1.60 | 59.52 |
| | S7 | Spherical | 0.019 | -1.70 | | |

In Table 1, the lens L1 has a surface S7 and a surface S8 in sequence from the reduction side A1 to the magnification side A2, that is, the surface S7 faces the light valve 60, and the surface S8 faces the reflective optical element 110. The lens L2 has a surface S9 and a surface S10 in sequence from the reduction side A1 to the magnification side A2, that is, the surface S9 faces the light valve 60, and the surface S10 faces the reflective optical element 110. The lenses L2, L3, and L4 are the cemented lens, so the surface of the lens L2 facing the magnification side A2 and the surface of the lens L3 facing the reduction side A1 are the same surface S10, and the surface of the lens L3 facing the magnification side A2 and the surface of the lens L4 facing the reduction side A1 are the same surface S11. By analogy, the surfaces corresponding to various elements will not be further described. In addition, in Table 1, "distance" refers to the distance between two adjacent surfaces along the optical axis OA. In the projection lens 100, the image beam is emitted from the surface S0 of the light valve 60 located on the reduction side A1, enters the projection lens 100 and then is transmitted towards the magnification side A2. For example, the distance corresponding to the surface S25 refers to the linear distance between the surface S25 and the surface S24 along the optical axis OA, and the distance corresponding to the surface S24 refers to the linear distance between the surface S24 and the surface S23 along the optical axis OA, and so on.

In this embodiment, the surface S7 and the surface S8 of the lens L1, the surface S19 and the surface S20 of the lens L9, the surface S23 and the surface S24 of the lens L11, and the reflective surface S25 of the reflective optical element 110 are all aspherical surfaces, and the surfaces of the rest of lenses are spherical surfaces. The equation for aspheric surfaces is as follows:

$$x = \frac{c'y^2}{1 + \sqrt{1 - (1+K)c'^2 y^2}} + Ay^2 + Ay^4 + By^6 + Cy^8 + Dy^{10} + Ey^{12} + Fy^{14} + Gy^{16} \dots$$

In the above equation, x is a sag in a direction of the optical axis, c' is a reciprocal of radius of an osculating sphere, i.e., a reciprocal of a radius of curvature near the optical axis, K is a conic coefficient, and y is an aspheric height, i.e., a height from a lens center to a lens edge. A-G respectively represent the various aspheric coefficients of the aspheric polynomial. The following Table 2 lists the parameter values of the surface S7 and the surface S8 of the lens L1, the surface S19 and the surface S20 of the lens L9, the surface S23 and the surface S24 of the lens L11, and the reflective surface S25 of the reflective optical element 110, and the second-order aspheric coefficient A is all 0.

Table 2

|   | S7 | S8 | S19 | S20 |
|---|---|---|---|---|
| K | 0 | 0 | 0 | 0 |
| B | 1.53E-04 | 1.73E-04 | -1.09E-03 | -1.23E-03 |
| C | -7.98E-08 | 5.02E-07 | 2.09E-05 | 2.63E-05 |
| D | 5.16E-08 | 4.65E-08 | -6.35E-07 | -4.47E-07 |
| E | -3.57E-10 | -8.82E-11 | 2.23E-08 | 7.44E-09 |
| F |  |  | -3.77E-10 | -6.76E-11 |
| G |  |  | 3.04E-12 | 2.79E-13 |
| H |  |  | -1.01E-14 | -2.69E-16 |
|   | S23 | S24 | S25 |  |
| K | 1.094 | 0 | -1.100 |  |
| B | -4.06E-04 | -2.86E-04 | 1.26E-06 |  |
| C | 4.75E-06 | 2.40E-06 | -2.32E-09 |  |
| D | 2.50E-07 | -2.45E-08 | 1.83E-12 |  |
| E | -7.83E-09 | 1.81E-10 | -1.13E-15 |  |
| F | 1.05E-10 | -1.02E-12 | 4.08E-19 |  |
| G | -7.19E-13 | 3.72E-15 | -7.07E-23 |  |
| H | 2.09E-15 | -6.49E-18 |  |  |

In this embodiment, the projection lens 100 satisfies 1.2 <| F2/F1 | <3.5, where F2 is the effective focal length of the reflective optical element 110, and F1 is the effective focal length of the first lens group G1 and the second lens group G2.

In this embodiment, the aperture of the projection lens 100 falls within the range of 1.7 to 2.0.

In this embodiment, the first lens group G1 of the projection lens 100 is a compensation group, and the second lens group G2 is a focus group. When the projection lens 100 is focusing, the first lens group G1 moves along the optical axis OA to compensate for the clarity of the paraxial image, and the second lens group G2 moves along the optical axis OA to adjust the resolution of the image in the off-axis field of view. Since the focal length of the projection lens 100 can be adjusted, a clear image can be maintained.

In addition, in this embodiment, the projection lens 100 further includes glass elements 130 and 150 and a prism 140 disposed between the light valve 60 and the first lens group G1. The glass element 130 is, for example, a protection cover for the light valve 60. The glass element 130, the prism 140 and the glass element 150 are arranged in sequence from the reduction side A1 to the magnification side A2 along the optical axis OA.

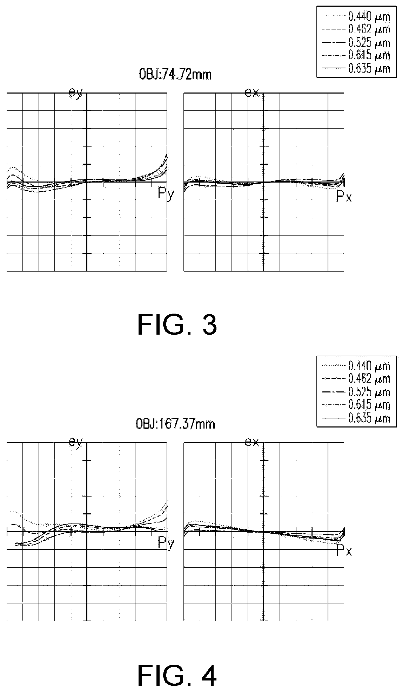

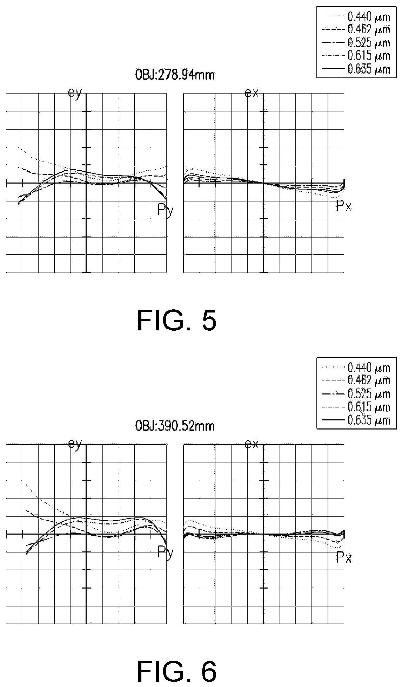

FIG. 3 to FIG. 7 are the transverse ray fan plots of the projection lens of FIG. 2 at different object heights, in which the maximum and minimum scales of the ex, ey, Px and Py axes are +20μm and -20μm respectively. Please refer to FIG. 3 to FIG. 7. The graphics shown in FIG. 3 to FIG. 7 are all within the standard range, which proves that the projection lens 100 of this embodiment can achieve a good optical imaging quality.

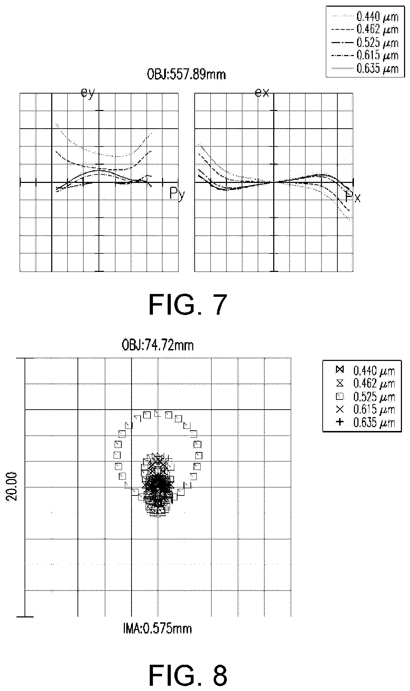

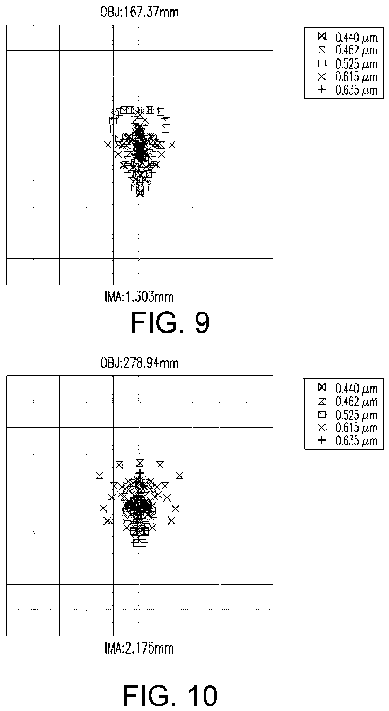

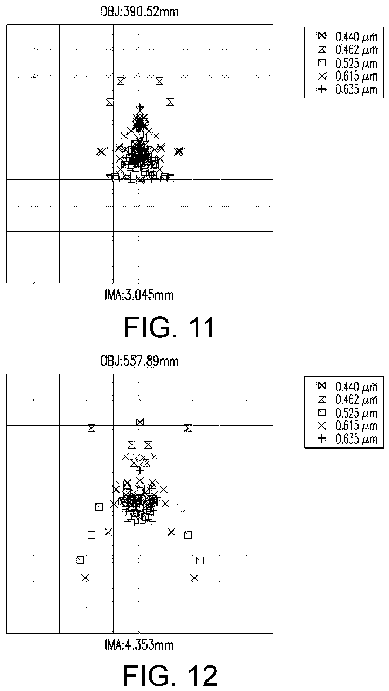

FIG. 8 to FIG. 12 are respectively spot diagrams of different wavelengths of light after passing through the projection lens of FIG. 2 at different image heights and object heights. The maximum range of the axis x and the axis y is 20μm. Please refer to FIG. 8 to FIG. 12, the light spot of various wavelengths of light after passing through the projection lens 100 is not too large, so the image projected by the projection lens 100 of this embodiment has a higher imaging quality.

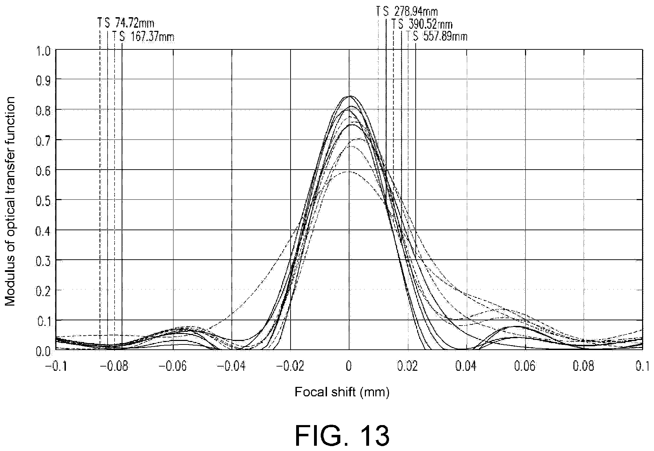

FIG. 13 is a modulation transfer function diagram of the projection lens of FIG. 2. FIG. 13 is a modulation transfer function (MTF) diagram of the projection lens 100 at different image heights, in which the horizontal axis represents the focus shift, and the vertical axis represents the modulus of the optical transfer function, T represents the curve in the tangential direction, S represents the curve in the sagittal direction, and the value marked next to "TS" represents the image height. It can be proved that the optical transfer function curve displayed by the projection lens 100 of this embodiment is within the standard range, and therefore has a good optical imaging quality, as shown in FIG. 13.

Based on the above, in an embodiment of the disclosure, the projection lens 100 or the projection apparatus 10 is provided with a reflective optical element 100, and by designing the projection lens to satisfy 1.2 <| F2/F1 | <3.5, the optical structure of the projection lens 100 or the projection apparatus 10 is relatively simple, which makes the design of mechanism easier.

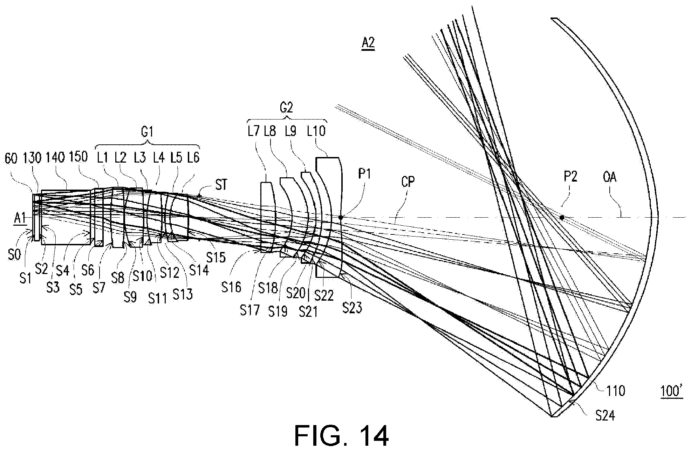

FIG. 14 is a schematic diagram of a projection lens according to a second embodiment of the disclosure. Please refer to FIG. 14. The projection lens 100' of the second embodiment of the disclosure is substantially similar to the projection lens 100 of the first embodiment shown in FIG. 2, and the differences between the two embodiments are as follows: the projection lens 100' includes ten lenses L1, L2, L3, L4, L5, L6, L7, L8, L9 and L10, and the optical data and parameters of the lenses L1, L2, L3, L4, L5, L6, L7, L8, L9 and L10 are more or less different.

In this embodiment, the first lens group G1 includes six lenses L1, L2, L3, L4, L5, and L6 that are arranged in sequence from the reduction side A1 to the magnification side A2 along the optical axis OA. The refractive powers of the six lenses L1, L2, L3, L4, L5, and L6 are positive, positive, negative, positive, negative, and positive in sequence from the reduction side A1 to the magnification side A2. The Abbe numbers of at least two of the six lenses L1, L2, L3, L4, L5, and L6 in the first lens group G1 are greater than or equal to 70. For example, the lens L2 and the lens L4 are made of nitrate materials and have an Abbe number greater than or equal to 70. The first lens group G1 includes at least one cemented lens. For example, the lenses L2, L3, and L4 are formed into a cemented lens, and the lenses L5 and L6 are formed into the other cemented lens. The first lens group G1 includes at least one aspheric lens. For example, the lens L1 is an aspheric lens.

In addition, the second lens group G2 includes four lenses L7, L8, L9, and L10 arranged in sequence from the reduction side A1 to the magnification side A2 along the optical axis OA, and the lenses L8 and L10 are aspheric lenses.

The following Table 3 and Table 4 list the data of a preferred embodiment of the projection lens 100'. However, the information listed below is not intended to limit the disclosure. Anyone familiar with the art in the related field can make appropriate changes to its parameters or settings after referring to the disclosure, but the change should still fall within the scope of the disclosure.

In this embodiment, the actual design of the aforementioned elements can be derived from Table 3 below.

Table 3

| Element | Surface | Type | Curvature (1/mm) | Distance (mm) | Refractive index (Nd) | Abbe number (Vd) |
|---------|---------|------|------------------|---------------|------------------------|-------------------|
| 110 | S24 | Aspherical | -0.033 | -71.36 | | |
| L10 | S23 | Aspherical | 0.043 | -2.20 | 1.53 | 56.28 |
| | S22 | Aspherical | -0.067 | -2.24 | | |
| L9 | S21 | Spherical | -0.056 | -1.20 | 1.77 | 49.60 |
| | S20 | Spherical | -0.090 | -1.81 | | |

(continued)

| Element | Surface | Type | Curvature (1/mm) | Distance (mm) | Refractive index (Nd) | Abbe number (Vd) |
|---|---|---|---|---|---|---|
| L8 | S19 | Aspherical | -0.053 | -3.67 | 1.53 | 56.28 |
| | S18 | Aspherical | -0.056 | -2.72 | | |
| L7 | S17 | Spherical | -0.059 | -3.50 | 1.87 | 19.99 |
| | S16 | Spherical | -0.016 | -14.17 | | |
| ST | | Plane | 0.000 | -2.46 | | |
| L6 | S15 | Spherical | -0.019 | -2.70 | 1.51 | 56.50 |
| L5 | S14 | Spherical | 0.113 | -0.60 | 1.75 | 50.71 |
| | S13 | Spherical | 0.068 | -1.00 | | |
| L4 | S12 | Spherical | -0.032 | -3.45 | 1.50 | 81.59 |
| L3 | S11 | Spherical | 0.092 | -0.80 | 1.86 | 23.05 |
| L2 | S10 | Spherical | -0.017 | -4.28 | 1.50 | 81.59 |
| | S9 | Spherical | 0.078 | -0.20 | | |
| L1 | S8 | Aspherical | -0.003 | -3.10 | 1.92 | 18.9 |
| | S7 | Aspherical | 0.043 | -1.70 | | |

Table 4 lists the parameter values of the surface S7 and the surface S8 of the lens L1, the surface S18 and the surface S19 of the lens L8, the surface S22 and the surface S23 of the lens L10, and the reflective surface S24 of the reflective optical element 110, and the second-order aspheric coefficient A is all 0.

Table 4

| | S7 | S8 | S18 | S19 |
|---|---|---|---|---|
| K | 0 | 0 | 0 | 0 |
| B | 2.02E-04 | 2.37E-04 | -1.12E-03 | -1.34E-03 |
| C | 8.59E-07 | 2.12E-06 | 1.84E-05 | 2.66E-05 |
| D | 5.96E-09 | -5.11E-09 | -6.57E-07 | -4.52E-07 |
| E | 2.24E-10 | 7.96E-10 | 2.28E-08 | 7.42E-09 |
| F | | | -3.77E-10 | -6.76E-11 |
| G | | | 3.04E-12 | 2.79E-13 |
| H | | | -1.01E-14 | -2.69E-16 |
| | S22 | S23 | S24 | |
| K | 1.152 | 0 | -1.104 | |
| B | -3.97E-04 | -2.97E-04 | 1.28E-06 | |
| C | 5.19E-06 | 2.40E-06 | -2.31E-09 | |
| D | 2.49E-07 | -2.39E-08 | 1.81E-12 | |
| E | -7.85E-09 | 1.76E-10 | -1.13E-15 | |
| F | 1.05E-10 | -1.02E-12 | 4.11E-19 | |
| G | -7.19E-13 | 3.72E-15 | -7.30E-23 | |
| H | 2.09E-15 | -6.49E-18 | | |

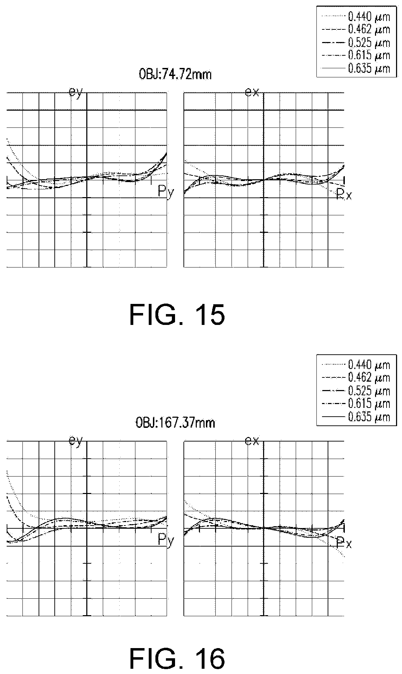

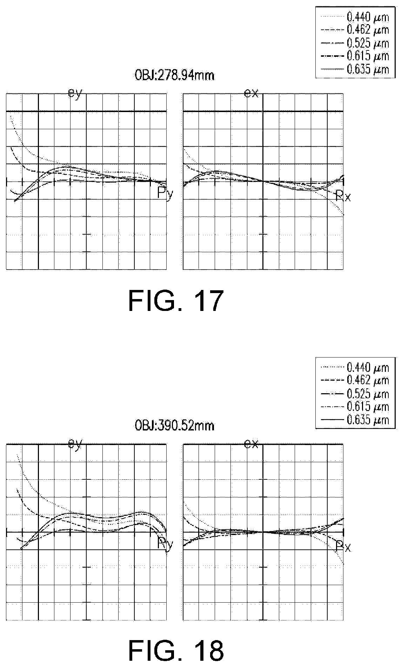

FIG. 15 to FIG. 19 are the transverse ray fan plots of the projection lens 100' of FIG. 14 at different object heights, in which the maximum and minimum scales of the ex, ey, Px and Py axes are +20µm and -20µm respectively. Please refer to FIG. 15 to FIG. 19. The graphics shown in FIG. 15 to FIG. 19 are all within the standard range, which proves that the projection lens 100' of this embodiment can achieve a good optical imaging quality.

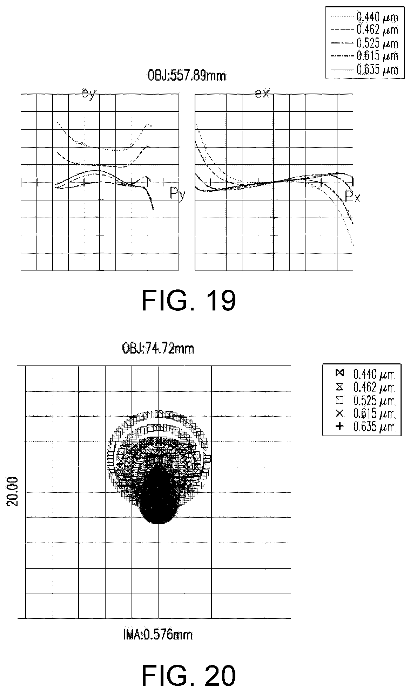

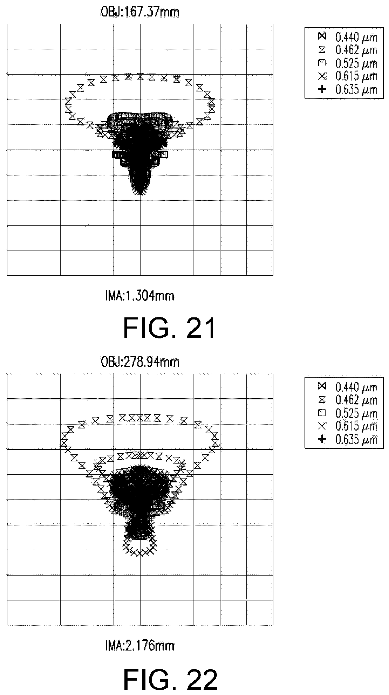

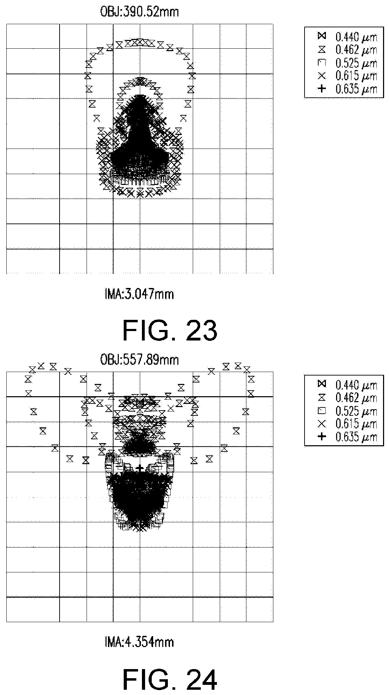

FIG. 20 to FIG. 24 are respectively spot diagrams of different wavelengths of light after passing through the projection lens of FIG. 14 at different image heights and object heights. The maximum range of the axis x and the axis y is 20µm. Please refer to FIG. 20 to FIG. 24, the light spot of various wavelengths of light after passing through the projection lens 100' is not too large, so the image projected by the projection lens 100' of this embodiment has a higher imaging quality.

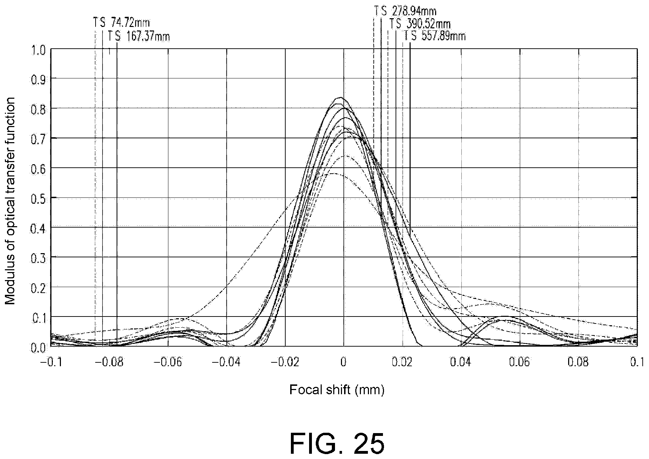

FIG. 25 is a modulation transfer function diagram of the projection lens of FIG. 14. It can be proved that the optical transfer function curve displayed by the projection lens 100' of this embodiment is within the standard range, so a good optical imaging quality can be achieved.

Based on the above, compared with the conventional projection lens, the total number of lenses used in the projection lens 100' in the second embodiment of the disclosure is reduced to 10, so that the length of the projection lens is reduced, the volume of material of the system can also be decreased, and the cost is further lowered.

In summary, in an embodiment of the disclosure, the projection lens or the projection apparatus is provided with a reflective optical element, and the projection lens is designed to satisfy $1.2 < |F_2/F_1| < 3.5$, the optical structure of the projection lens or projection apparatus is relatively simple, making the design of mechanism easier.

The foregoing description of the preferred embodiments of the disclosure has been presented for purposes of illustration and description. It is not intended to be exhaustive or to limit the exemplary disclosure to the precise form or to embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the disclosure", "the present disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the present disclosure as defined by the following claims. Moreover, no element and component in the present disclosure is intended to be dedicated to the public regardless of whether the element or component is explicitly recited in the following claims.

**Claims**

1. A projection lens (100, 100'), comprising a first lens group (G1), an aperture stop (ST), a second lens group (G2), and a reflective optical element (110_ arranged in sequence from a reduction side (A1) to a magnification side (A2) along an optical axis (OA); wherein

   the first lens group (G1) has a positive refractive power;
   the second lens group (G2) has a negative refractive power; and
   the reflective optical element (110) has the positive refractive power;
   wherein the projection lens (100, 100') satisfies $1.2 < |F_2/F_1| < 3.5$, $F_2$ is an effective focal length of the reflective optical element (110), and $F_1$ is an effective focal length of the first lens group (G1) and the second lens group (G2).

2. The projection lens (100) according to claim 1, wherein the first lens group (G1) comprises seven lenses (L1~L7), the refractive powers of the seven lenses (L1~L7) are positive, positive, negative, positive, negative, negative, and positive in sequence from the reduction side (A1) to the magnification side (A2), and/or Abbe numbers of at least two of the seven lenses (L1~L7) are greater than or equal to 70.

3. The projection lens (100, 100') according to claim 1 or 2, wherein the second lens group (G2) comprises four lenses (L8~L11), and the refractive powers of the four lenses (L8~L11) are positive, negative, negative, and negative in sequence from the reduction side (A1) to the magnification side (A2).

4. The projection lens (100') according to claim 1, wherein the first lens group (G1) comprises six lenses (L1~L6), the refractive powers of the six lenses (L1~L6) are positive, positive, negative, positive, negative, and positive in sequence from the reduction side (A1) to the magnification side (A2), and/or Abbe numbers of at least two of the six lenses (L1~L6) are greater than or equal to 70.

5. The projection lens (100, 100') according to any one of the preceding claims, wherein the first lens group (G1) comprises at least one cemented lens.

6. The projection lens (100, 100') according to any one of the preceding claims, wherein the first lens group (G1) comprises at least one aspheric lens.

7. The projection lens (100, 100') according to any one of the preceding claims, wherein the second lens group (G2) comprises at least one aspheric lens.

8. The projection lens (100, 100') according to any one of the preceding claims, wherein an aperture of the projection lens (100, 100') falls within a range of 1.7 to 2.0.

9. The projection lens (100, 100') according to any one of the preceding claims, wherein the first lens group (G1) is a compensation group.

10. The projection lens (100, 100') according to any one of the preceding claims, wherein the second lens group (G2) is a focus group.

11. The projection lens (100, 100') according to any one of the preceding claims, wherein when the projection lens (100, 100') performs focusing, the first lens group (G1) and the second lens group (G2) move along the optical axis (OA).

12. A projection apparatus (10), comprising an illumination system (50), a light valve (60), and a projection lens (100, 100'), wherein:

the illumination system (50) is configured to provide an illumination beam (I);
the light valve (60) is arranged on a transmission path of the illumination beam (I), and configured to convert the illumination beam (I) into an image beam (IB); and
the projection lens (100, 100') according to any one of the preceding claims, wherein the projection lens (100, 100') is arranged on a transmission path of the image beam (IB), and configured for receiving the image beam (IB) from the light valve (60) to generate project a projection beam (PB).

13. The projection apparatus (10) according to claim 12, wherein the projection beam (PB) forms an image on an imaging plane (IP) after being projected from the projection apparatus (10).

14. The projection apparatus (10) according to claim 12 or 13, wherein a central beam (CP) of the image beam (IB) emitted from a center of the light valve (60) is projected by the projection lens (100, 100') and corresponds to a center of the image formed on the imaging plane (IP), and there are two intersection points (P1, P2) between the central beam (CP) of the image beam (IB) and the optical axis (OA).

50   60   100

I   IB   PB   IP

10

# FIG. 1

FIG. 2

FIG. 3

FIG. 4

FIG. 5

FIG. 6

OBJ:557.89mm

| | 0.440 μm |
|---|---|
| | 0.462 μm |
| | 0.525 μm |
| | 0.615 μm |
| | 0.635 μm |

ey

ex

Py

Px

## FIG. 7

OBJ:74.72mm

| ⋈ | 0.440 μm |
|---|---|
| ⊠ | 0.462 μm |
| ⊡ | 0.525 μm |
| × | 0.615 μm |
| + | 0.635 μm |

20.00

IMA:0.575mm

## FIG. 8

OBJ:167.37mm

| ⋈ | 0.440 μm |
| ⋉ | 0.462 μm |
| ▱ | 0.525 μm |
| ✕ | 0.615 μm |
| ＋ | 0.635 μm |

IMA:1.303mm

## FIG. 9

OBJ:278.94mm

| ⋈ | 0.440 μm |
| ⋉ | 0.462 μm |
| ▱ | 0.525 μm |
| ✕ | 0.615 μm |
| ＋ | 0.635 μm |

IMA:2.175mm

## FIG. 10

OBJ:390.52mm

| | 0.440 $\mu$m |
|---|---|
| | 0.462 $\mu$m |
| | 0.525 $\mu$m |
| ✕ | 0.615 $\mu$m |
| + | 0.635 $\mu$m |

IMA:3.045mm

# FIG. 11

OBJ:557.89mm

| | 0.440 $\mu$m |
|---|---|
| | 0.462 $\mu$m |
| | 0.525 $\mu$m |
| ✕ | 0.615 $\mu$m |
| + | 0.635 $\mu$m |

IMA:4.353mm

# FIG. 12

FIG. 13

FIG. 14

0.440 μm
0.462 μm
0.525 μm
0.615 μm
0.635 μm

OBJ:74.72mm

ey  ex

Py  Px

## FIG. 15

0.440 μm
0.462 μm
0.525 μm
0.615 μm
0.635 μm

OBJ:167.37mm

ey  ex

Py  Px

## FIG. 16

OBJ:278.94mm

0.440 μm
0.462 μm
0.525 μm
0.615 μm
0.635 μm

ey    ex

Py    Rx

## FIG. 17

OBJ:390.52mm

0.440 μm
0.462 μm
0.525 μm
0.615 μm
0.635 μm

ey    ex

Py    Rx

## FIG. 18

OBJ:557.89mm

0.440 μm
0.462 μm
0.525 μm
0.615 μm
0.635 μm

ey

ex

Py

Px

## FIG. 19

OBJ:74.72mm

⋈ 0.440 μm
⊠ 0.462 μm
⊡ 0.525 μm
× 0.615 μm
+ 0.635 μm

20.00

IMA:0.576mm

## FIG. 20

OBJ:167.37mm

| | |
|---|---|
| ⋈ | 0.440 $\mu$m |
| ⊠ | 0.462 $\mu$m |
| ⊓ | 0.525 $\mu$m |
| × | 0.615 $\mu$m |
| + | 0.635 $\mu$m |

IMA:1.304mm

## FIG. 21

OBJ:278.94mm

| | |
|---|---|
| ⋈ | 0.440 $\mu$m |
| ⊠ | 0.462 $\mu$m |
| ⊡ | 0.525 $\mu$m |
| × | 0.615 $\mu$m |
| + | 0.635 $\mu$m |

IMA:2.176mm

## FIG. 22

OBJ:390.52mm

| | |
|---|---|
| ⋈ | 0.440 μm |
| ⊠ | 0.462 μm |
| ⊓ | 0.525 μm |
| × | 0.615 μm |
| + | 0.635 μm |

IMA:3.047mm

## FIG. 23

OBJ:557.89mm

| | |
|---|---|
| ⋈ | 0.440 μm |
| ⊠ | 0.462 μm |
| ⊡ | 0.525 μm |
| × | 0.615 μm |
| + | 0.635 μm |

IMA:4.354mm

## FIG. 24

FIG. 25

Europäisches
Patentamt

European
Patent Office

Office européen
des brevets

# EUROPEAN SEARCH REPORT

Application Number

EP 22 19 2253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/285972 A1 (MINEFUJI NOBUTAKA [JP]) 19 September 2019 (2019-09-19) | 1-8,10, 12-14 | INV. G02B13/16 |
| Y | * example 1; tables 1-3,22 * | 9,11 | G02B17/08 G02B27/18 |
| Y | WO 2020/009026 A1 (NITTOH INC [JP]) 9 January 2020 (2020-01-09) * figures 1-5 * ----- | 9,11 | G03B21/14 G03B21/28 |

TECHNICAL FIELDS
SEARCHED      (IPC)

G02B
G03D
G03B

The present search report has been drawn up for all claims

| Place of search | Date of completion of the search | Examiner |
|---|---|---|
| Munich | 24 January 2023 | Muller, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 19 2253

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2023

| Patent document cited in search report | | Publication date | Patent family member(s) | | Publication date |
|---|---|---|---|---|---|
| US 2019285972 | A1 | 19-09-2019 | CN | 110286478 A | 27-09-2019 |
| | | | JP | 2019164184 A | 26-09-2019 |
| | | | US | 2019285972 A1 | 19-09-2019 |
| WO 2020009026 | A1 | 09-01-2020 | JP | 2021167848 A | 21-10-2021 |
| | | | WO | 2020009026 A1 | 09-01-2020 |

EPO FORM P0459

For more details about this annex : see Official Journal of the European Patent Office, No. 12/82